(19) **Europäisches Patentamt European Patent Office Office européen des brevets**

(11) **EP 4 764 439 A1**

(12) **EUROPEAN PATENT APPLICATION**

(43) Date of publication:
 **24.06.2026 Bulletin 2026/26**

(21) Application number: **24222618.1**

(22) Date of filing: **20.12.2024**

(51) International Patent Classification (IPC):
 **G01M 3/00** *(2006.01)* **G01M 99/00** *(2011.01)*
 **F16K 37/00** *(2006.01)* **G01M 13/003** *(2019.01)*

(52) Cooperative Patent Classification (CPC):
 **G01M 99/002; G01M 3/002; G01M 13/003**

(84) Designated Contracting States:
 **AL AT BE BG CH CY CZ DE DK EE ES FI FR GB GR HR HU IE IS IT LI LT LU LV MC ME MK MT NL NO PL PT RO RS SE SI SK SM TR**
 Designated Extension States:
 **BA**
 Designated Validation States:
 **GE KH MA MD TN**

(71) Applicant: **Institut von Karman de Dynamique des Fluides**
 **1640 Rhode-Saint-Genèse (BE)**

(72) Inventor: **MOUTINHO NEVES MOREIRA DE PINHO, Jorge Manuel**
 **1640 Rhode-Saint-Genése (BE)**

(74) Representative: **V.O.**
 **P.O. Box 87930**
 **2508 DH Den Haag (NL)**

(54) **CAVITATION DETECTION SYSTEM, METHOD FOR DETECTING CAVITATION**

(57) Cavitation detection system for detecting cavitation in a hydraulic system, the detection system comprising a first temperature sensor configured to be positioned at a first position in the hydraulic system; a second temperature sensor configured to be position at a second position in the hydraulic system, the second position being downstream of the first position; a control unit configured to receive the temperature values sensed by the first and second temperature sensors and configured to, if a temperature difference is detected, issue a cavitation detection signal.

FIG. 1

## EP 4 764 439 A1

**Description**

The invention relates to a method and system for detecting cavitation in a flow system. In particular, the invention relates to a method and system for detecting cavitation over a valve in a flow system.

Flow systems are widely used in various applications. Typically flow systems comprise one or more tubes, or pipelines, and at least one flow restriction such as a valve, an elbow, a nozzle etc.. Various other components may be comprised in such a flow system from flow dividers over sensors to buffers etc. Depending on the flow conditions, such as temperature, flow velocity, pressure etc. the flow may become unstable in the flow system. In particular, the flow may become unstable over a restriction, e.g. a valve in the flow system. For example, cavitation may occur in a valve. Cavitation may be described as the sudden formation of vapour cavities, as a consequence of rapid changes of pressure that may cause the vaporization followed by condensation of a flowing liquid. This phenomenon is regarded to be destructive in most cases. It can cause significant engineering problems such as limitation of the discharge rates in valves, efficiency losses in pumps, damage and erosion of blade propellers, noise and/or vibration. Cavitation of the fluid may cause damage to the flow system, to the valve or other components of the flow system. Cavitation may make the flow unpredictable and/or uncontrollable and/or may influence the performance of the flow system and/or of the restriction. Therefore, there is a need to detect when cavitation occurs in the valve. Upon detection of cavitation appropriate measures may then be taken to, for example, bring the flow back to its non cavitating condition.

Systems to detect cavitation in a valve exist, but are often costly, fragile, not robust, difficult to build in etc.

For example, publication CN117628007 discloses a cavitation simulation system based on comparison between thermocouple modules. The simulation system is placed next to the pipeline that is being monitored. In the simulation system, cavitation is artificially created by means of a water pump, venturi pipe and a ventilator. A thermocouple module is placed downstream of the venturi tube where the cavitation occurs. Another thermocouple is placed on the pipeline to be detected. A temperature difference between the two thermocouples generates a current. The degree of cavitation in the simulation system can be adjusted to keep the current between the thermocouples small. The degree of cavitation generated in the simulation system thus matches the cavitation level in the pipeline to be detected. Therefore, when the current between the thermocouples is minimized or stable, it indicates that the cavitation levels in both areas are equivalent. However, this simulation system is bulky, costly, requires complex components and is difficult to control.

Therefore, there is a need for a more reliable and/or robust detection method and detection system for detecting cavitation. Further, there is a need for a cavitation detection system that can be suitable to be built-in and/or for retrofitting.

Thereto, the invention provides for a method according to claim 1 and a system according to claim 14.

The inventor found surprisingly that knowing the upstream temperature at a first position and the downstream temperature at a second position was sufficient to determine cavitation in between the first position and the second position. When cavitation occurs in a part of the hydraulic system, the temperature drops over the said part. The expansion of the fluid due to the cavitation over the part of the said part of the hydraulic system is assumed to be isenthalpic. So, although cavitation occurs in a part of the hydraulic system, the enthalpy remains the same, resulting in a pressure and a temperature drop. This temperature drop is being measured by the temperature sensors positioned upstream and downstream of the said part of the hydraulic system. Much to his surprise, the inventor found that the temperature drop in an isenthalpic expansion indicated that cavitation occurred. Tests were done with cryogenic fluids, such as liquid nitrogen LN2. The temperature drop for such applications is relatively high because the fluid is thermosensitive, and therefore, this method is quite robust.

In fact, to establish whether or not cavitation occurs over a part of the system, it appeared to be sufficient to know the temperature difference over the said part of the system. So, sensing the temperature at the first position and sensing the temperature at the second position, and then determine the difference gives sufficient information about the cavitating or non-cavitating of the flow between the first and the second position. The sensing of the temperatures at the first and second positions can be done by a differential temperature sensor that typically gives as output a temperature difference and/or a temperature difference value. The differential temperature sensor may typically be positioned in between the first position and the second position to sense the difference in temperature between the first and second position. Alternatively and/or additionally, the sensing of the temperatures at the first and second positions can be done by a first temperature sensor at the first position and a second temperature sensor at the second position. The first and second temperature sensors may output absolute temperature values to a control unit which then may determine the difference between the outputted temperature values. Based thereon, it may be established that the flow condition is cavitating or not.

Preferably, the part of the hydraulic system in which cavitation is to be monitored includes a pipeline system, more preferably includes a flow restriction. An hydraulic system may comprise multiple components such as pipelines, pumps, valves, elbows, etc. Components such as a valve, an elbow, an orifice or a nozzle may be considered as flow restrictions. Fluid flowing through such a flow restriction may be impacted by the flow restriction depending on pressure and/or temperature upstream of the flow restriction.

In particular when there is a flow restriction in the part of the system in which cavitation is to be monitored, this method proves to be robust. A flow restriction, such as a valve, an orifice, an elbow, a fitting, a venturi, etc. may have an impact on the flow properties of the fluid flowing through such a restriction. Cavitation may occur over such a flow restriction resulting in a two-phase flow with gas bubbles in a liquid. Gas bubbles may also be denoted as gas voids. Such two-phase flow may not only damage parts of the hydraulic system, but may also reduce the effectiveness of the respective flow restriction, and therefore, it becomes important to know when cavitation occurs over the flow restriction. In case of an isenthalpic expansion, a pressure drop over the flow restriction indicated that cavitation occurs over the flow restriction. Knowing that cavitation occurs, may allow an operator of the hydraulic system to adapt some flow conditions such that the flow may return to a non-cavitating condition.

To effectively measure the temperature difference over the said part of the hydraulic system to be monitored, e.g. over the flow restriction, the temperature sensors are preferably positioned near the flow restriction. The temperature sensors may be positioned at an outside of the pipeline section, considering that a temperature of an outer wall of the pipeline section is indicative of the temperature inside of the pipeline section, and that a temperature difference is of interest. Alternatively, the temperature sensors may be positioned inside of the hydraulic system or may be otherwise integrated to the hydraulic system. Preferably, a distance between the first and second positions of the temperature sensors is about 1 - 10 times the diameter of the part of the system in which cavitation is to be monitored, the said part being between the first and the second position. The diameter may be understood as an outer diameter of a pipeline section of the said part. As such, the first and the second position are not too far from the said part in the hydraulic system, preferably from the flow restriction over which cavitation may be monitored, allowing a reliable and/or accurate sensing of a temperature difference over the said part, preferably over the flow restriction.

Advantageously, the first position may be about two times the diameter of the pipeline section of the said part upstream of the said part. As such, the first position is sufficiently close to the part to be monitored to give an accurate temperature indication. Preferably, the first position may be about two times the diameter of the pipeline section of the said part positioned upstream of the restriction.

The second position at which the second temperature sensor is positioned may be directly at an outlet of the said part to be monitored, or may be at an outlet of the restriction of the said part. Preferably, the second position is such that, when cavitation occurs, it can be sensed by the temperature sensor at the second position. Thereto, the second position may be relatively closely to the flow restriction. For example, when the flow restriction is a valve, it may be considered to provide the second position at an outlet of the valve.

When cavitation occurs over the part of the hydraulic system to be monitored, assuming isenthalpic expansion, there is a reduction in pressure and/or temperature over the said part of the hydraulic system. Depending on the fluid properties and operational conditions, the temperature drop can be more or less significant. For example, for a cryogenic fluid, such as liquid nitrogen, the temperature drop can be quite significant, e.g. 10K. For example, for other fluids, such as water, the temperature drop may be much less significant, but still present. Nevertheless, also a small temperature drop can be sensed by temperature sensors which are properly sized and/or sufficiently accurate. The method is robust for various types of fluids in isenthalpic expansion.

If a temperature difference between the first position and the second position is being detected, it can be said that cavitation occurs. A detection signal can then be issued. Such a detection signal can be issued in various forms, e.g. an auditive or visual signal can be provided, or a tactile signal e.g. to the operator of the hydraulic system can be provided. The signal can be displayed on a user interface or can be a flash light on the hydraulic system. Various options and alternatives can be possible. A threshold can be set for the temperature difference. For example, if the temperature difference is smaller than or equal to 0,1K there is no cavitation. The threshold of 0, 1K can be set depending on the accuracy of the temperature sensors. If the temperature difference is between 0,1K and 3K, it can be said that there is weak cavitation detected. If the temperature difference is between 3K and 10K it can be said that mild cavitation is detected. If the temperature difference of more than 10K, it can be said that severe cavitation is detected. Of course, the end user or operator can set the various thresholds depending on sensor accuracy, depending on the fluid and/or operational conditions. It is understood that the above values are only indicative.

Further, when the absolute temperatures at the first and the second position respectively are known, other quantities of the fluid in cavitation can be calculated, such as mass fraction of the voids, density, speed of sound. Fluid properties can be selected from a publicly known database, such as NIST Chemistry WebBook of 2023, but any database with fluid properties can be used. Required fluid properties are typically depending on temperature, or on temperature difference, for a specific fluid. One such fluid property is for example enthalpy. The temperature at the first position and at the second position, so upstream and downstream of the part of the hydraulic system that is monitored, e.g. of the flow restriction. If the temperature and the fluid identity, i.e. it is known which fluid is in the system, are known, the enthalpy, being dependent on the temperature, can be selected from the fluid properties database. Then, the mass fraction of vapour versus liquid in the cavitating fluid can be calculated using the following equation.

$$x = \frac{h_1 - h_{liq}}{h_{liq} - h_{vap}}$$

wherein

x = mass fraction, h = enthalpy, T = temperature.
$h_1 = f(T_1)$ , enthalpy of the fluid at the first position;
$h_{liq}$ - $f(T_2)$, enthalpy of the liquid fraction at the second position;
$h_{vap} = f(T_2)$, enthalpy of the vapour fraction at the second position.

In a similar manner, the density and the speed of sound of the fluid downstream of the flow restriction can be calculated.

Advantageously, an existing hydraulic system can be retrofitted such that cavitation detection becomes possible over parts of the system, in particular over flow restrictions of the system. By placing a first temperature sensor at a first position in the hydraulic system, wherein the first temperature sensor contacts an outer wall of the hydraulic system, and by placing a second temperature sensor at a second position in the hydraulic system, the second position being downstream of the first position, wherein the second temperature sensor contacts an outer wall of the hydraulic system, a first and second temperature can be sensed by the temperature sensors at two distinct positions, preferably wherein between the first position and the second position a restriction in the hydraulic system is present. Further, a control unit is provided that is configured to receive detected temperature values from the first temperature sensor and the second temperature sensor, and that is configured to issue a cavitation detection signal if a temperature difference is detected.

The inventor found that to determine cavitation over a part of a hydraulic system, it suffices to know the temperature difference between upstream and downstream of said part, respectively between a first position and a second position, or otherwise said at an inlet and an outlet of said part. Since only the temperature difference is of interest, the temperature sensors can be attached to an outer wall of the part of interest of the hydraulic system, assuming that a temperature on the wall of the system is representative to the temperature of the fluid inside of the system. It is noted that the temperature sensor then may be connected directly to the outer wall of the system.. As such, retrofitting an existing hydraulic system with a cavitation detection system, can be done easily.

In another aspect, the method and/or the control unit can be configured to monitor certain parameters of the hydraulic system and to alert and/or take corrective actions when a parameter goes beyond a predefined threshold. As such, it may become possible to prevent cavitation to occur in the hydraulic system. For example, when using the method, it may become known when and/or with which parameters, cavitation may occur in the hydraulic system. Then, thresholds or boundaries can be predefined, and the identified parameters can be monitored. An alert signal and/or corrective actions can be set when one of the identified parameters goes beyond the predefined threshold or outside predefined boundaries. As such, cavitation may be avoided by staying within the boundaries or threshold of respective parameters defined.

The invention further relates to a detection system for detecting cavitation in a hydraulic system. The detection system can be an add-on module that can be providing to e.g. an existing hydraulic system. Such an add-on module may be a standalone system having its own energy supply. Alternatively and/or additionally, the detection system may be connected to an energy supply of the hydraulic system, or to the mains. The detection system may comprise first and second temperature sensors at the first and second positions respectively and/or a differential temperature sensor identifying a temperature difference between the first position and the second position. Advantageously, the first position and the second position are not too far apart, preferably with the part of the hydraulic system in which cavitation is to be monitored and/or detected in between. The first and second position may be at a distance from each other between about 1 - 10 times a diameter of the said part in between them. The diameter may be an internal diameter or an external diameter or even the smallest diameter of the said part, the so-called vena contracta diameter. Preferably, the first position is about or not more than two times the diameter of the said part upstream of the said part, more preferably upstream of a flow restriction in said part.

Alternatively, the detection system may be integrated to the hydraulic system, e.g. with temperature sensors inside of pipeline sections of the hydraulic system. In another aspect, the detection system may be integrated to the flow restriction that is to become part of the hydraulic system. A flow restriction such as an elbow or a valve can be already provided with a temperature sensor at an inlet and a temperature sensor at an outlet, which can communicate with a control unit configured to receive the sensed temperature values, and, if a temperature difference occurs, to issue a signal. As such, a flow restriction with an integrated cavitation detection system can be provided, which can be built to the hydraulic system.

In another aspect, a computer program product can be provided that comprises instruction to perform the aforementioned method.

Further, a computer-readable medium with the computer program stored thereon, can be provided.

Further advantageous embodiments are represented in the sub claims.

In the following, the invention will be explained further using examples of embodiments and drawings. In the drawings:

Fig. 1 shows a schematic representation of a part of a hydraulic system with a cavitation detection system;
Fig. 2 shows a method to detect cavitation and/or to calculate other flow quantities according to the invention.

The drawings are schematic and merely show an example. In the drawings, corresponding elements are provided with corresponding reference signs. For clarity of the drawings, some elements and/or references signs may be omitted from some of the figures, wherein the presence of such elements may nevertheless be understood in view of one of more other figures and/or the description.

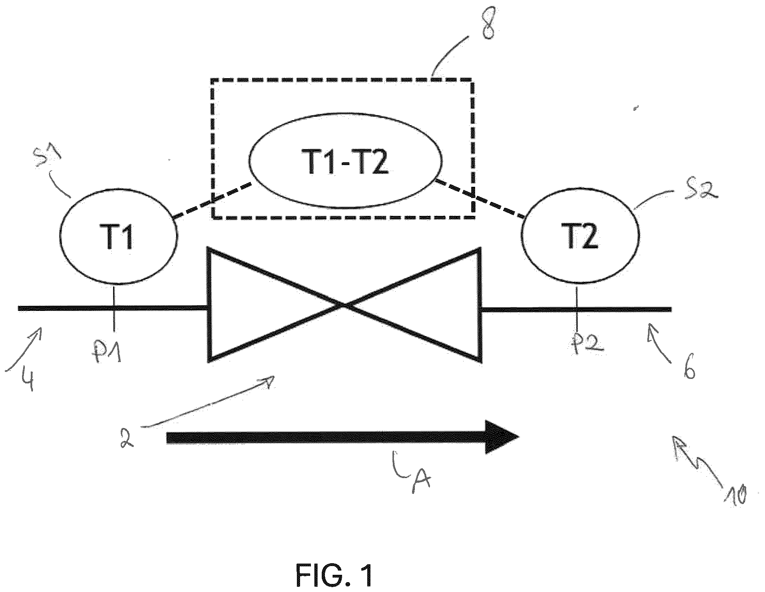

Fig. 1 shows a part 10 of a hydraulic system in which cavitation is to be monitored. The part 10 here comprises a critical section with a flow restriction 2, here a valve, but the flow restriction 2 can be any other type of flow restriction in a hydraulic system, e.g. a nozzle, an elbow, an orifice, a fitting, etc. The arrow A gives an indication of the flow direction through the part 10, here in the figure from left to right of the figure. The part 10 further comprises an inlet pipeline section 4 upstream of the flow restriction 2 and an outlet pipeline section 6 downstream of the flow restriction 2. With the pipeline sections 4, 6 the part 10 can be connected to the hydraulic system.

A first temperature sensor S1 is positioned at position P1 and configured for sensing a temperature T1 of the fluid prior to entering the flow restriction 2, wherein position P1 is upstream of the flow restriction 2. A second temperature sensor S2 is placed at position P2, configured for sensing a temperature T2 of the fluid leaving the flow restriction, wherein the position P2 is downstream of the flow restriction 2. It is noted that instead of a first and second temperature sensor, a single differential temperature sensor can be used which then is positioned between the first position and the second position. Such differential temperature sensor nevertheless senses a temperature at the first position and at the second position, but outputs the temperature difference. The first temperature sensor S1 and the second temperature S2 typically may output absolute temperature values. Advantageously, the distance between position P1 and position P2 may be limited to allow for accurate and reliable temperature sensing around a critical section of the hydraulic system to provide for a robust detection of cavitation. For example, position P2 may be near, at or in an outlet of the flow restriction 2, in any event in the outlet pipeline section 6. Advantageously, the first position P1 is not too far upstream of position P2, e,g, between about 1 - 10 times of a diameter of the pipeline sections 4, 6, in particular between about 1 - 10 times an outer diameter of the pipeline section 4, should the pipeline sections 4, 6 may have a somewhat different diameter.

The flow in the hydraulic system, and in particular in the part 10 of the hydraulic system can said to be isenthalpic. If then a temperature difference, in particular a temperature reduction T2 < T1, is detected, cavitation is likely to be occurring through the flow restriction 2. The temperature sensors S 1, S2 are in operational connection with a control unit 8. The control unit 8 is configured to receive the sensed temperatures T1, T2 of the respective sensors S 1, S2. There is at least communication between the sensors S1, S2 and the control unit 8 such that the control unit 8 can receive the sensed temperatures T1, T2. The control unit 8 may then calculated whether a difference in the sensed temperature occurs, and, in case of a difference, it can send a signal indicating that cavitation has been detected. Such signal may allow e.g. an operator of the hydraulic system to take corrective actions to restore the flow condition back to a non-cavitating condition. Such corrective actions may be e.g. adapting pressure, flow rate, or acting on valves, heat exchangers or other regulators to bring the flow condition back to a non-cavitating condition. Various regimes may be set, e.g. depending on the sensitivity and/or the accuracy of the sensors S1, S2, it may be defined that there is no cavitation when $T1 - T2 \leq 0,1K$. If a temperature difference of $0, 1K < T1-T2 \leq 3K$ is detected, one may speak of weak cavitation. If a temperature difference of $3K < T1-T2 \leq 10K$ is detected, it may be said that there is mild cavitation over the flow restriction. Then, if a temperature difference of $T1-T2 < 10K$ is detected, one may speak of severe cavitation. Of course, the temperature difference greatly depends on the fluid that is flowing in the hydraulic system and/or on the operational conditions. For example, for a fluid such as liquid nitrogen flowing in cryogenic conditions, a sensed temperature difference may be much larger than for a fluid such as water flowing in atmospheric conditions. In the latter, the sensed temperature drop may be much lower, so accuracy of the sensors may become relevant to reliable and accurately sense the temperatures T1, T2.

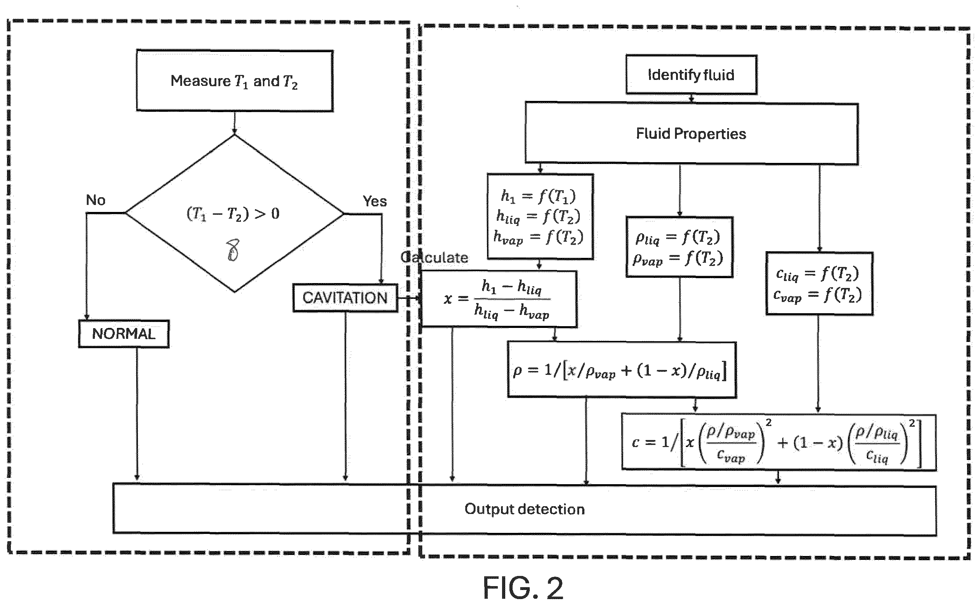

Figure 2 gives a schematic overview of methods according to the invention. In a first method, the temperatures T1 and T2 are measured at positions P1 and P2 upstream and downstream of a critical section in a part of the hydraulic system. If a difference in temperature is detected, by a control unit 8, the flow can be said to be in cavitation. If no difference in temperature is detected, the flow can be said to be in normal condition. The results - cavitation or normal flow - can then be outputted, e.g. as an output signal.

In a next step, various other flow quantities of the fluid at the second position can be calculated. The control unit 8 thereto is configured to access a database with fluid properties. The identity of the fluid flowing in the hydraulic system can be inputted in the control unit by an operator. Further, the temperature T1 at position P1 and the temperature T2 at position P2 is known. Also, it is known that the fluid over the critical section is in cavitation as there is a temperature difference between T1 and T2. This means that the fluid at and downstream of the critical section, such as a flow restriction, comprises a liquid phase and a vapour phase. Based on the fluid identity and the sensed temperatures T1 and T2, the enthalpy can be selected from the fluid properties database. With the selected enthalpy values, the mass fraction of the vapour versus the liquid in the cavitation flow can be calculated. Such mass fraction gives an indication of how much vapour phase is present in the flow, and thus, how severe the cavitation may be.

Further, the density of the liquid phase and of the vapour phase at temperature T2 can be selected by the control unit from the fluid properties database. Using this density input, together with the mass fraction input, the control unit can be configured to calculate the density of the fluid in cavitation using the following equation.

$$\rho = 1/\left[x/\rho_{vap} + (1-x)/\rho_{liq}\right]$$

Wherein x = mass fraction

$\rho_{liq} = f(T_2)$, the density of the liquid phase at temperature T2;

$\rho_{vap} - f(T_2)$, the density of the vapour phase at temperature T2.

Further, the control unit can be configured to access and to select the speed of sound of the liquid phase at temperature T2 from the fluid properties database, as well as the control unit can be configured to access and select the speed of sound of the vapour phase at temperature T2 from the fluid properties database. The control unit then may be configured to calculated the speed of sound of the fluid at or near the critical section downstream thereof using the following equation:

$$c = 1/\left[x\left(\frac{\rho/\rho_{vap}}{c_{vap}}\right)^2 + (1-x)\left(\frac{\rho/\rho_{liq}}{c_{liq}}\right)^2\right],$$

wherein c = speed of sound

$\rho$ = density of the fluid at position P2;

$c_{liq} = f(T_2)$, speed of sound of the liquid phase at temperature T2;

$c_{vap} = f(T_2)$, speed of sound of the vapour phase at temperature T2.

So, with only measuring the temperature upstream and downstream of the critical section of the part of the hydraulic system to be monitored, a plurality of information can be provided from the fluid flow downstream of the critical section. The part of the hydraulic system to be monitored may comprise the critical section, such as a flow restriction, and/or an inlet pipeline section and/or outlet pipeline section. The temperature sensors are advantageously positioned sufficiently close to the critical section, advantageously not more than two times a diameter of the associated pipeline section. As such an accurate and/or robust indication can be given with respect to the cavitation over the critical section. It is noted that a temperature measurement at the input of the whole hydraulic system, and then again at the output of the whole hydraulic system is not sufficient. A temperature measurement locally at the critical section is required to provide a reliable outcome.

For the purpose of clarity and a concise description features are described herein as part of the same or separate embodiments, however, it will be appreciated that the scope of the invention may include embodiments having combinations of all or some of the features described as long as they fall in the scope of the appended claims. In view of this passage it is evident to the skilled reader that the variants of claim 1 as filed may be combined with other features described in the application as filed, in particular with features disclosed in the dependent claims. Although the invention has been explained further herein using examples of embodiments and drawings, these do not limit the scope of the invention as defined by the claims. Within said scope defined by the claims, many variations, combinations and extensions are possible, as shall be appreciated by the skilled person having the benefit of the present disclosure.

**Claims**

1. Method for detecting cavitation in a hydraulic system, the method comprising:

   - measuring a first temperature at a first position in the hydraulic system;

- measuring a second temperature at a second position in the hydraulic system; wherein the second position is downstream of the first position with a part of the system in which cavitation is to be monitored in between;
- evaluating a temperature difference between the first and second temperature;
- issuing, if a temperature difference is detected, a cavitation detection signal.

2. Method according to claim 1, wherein the part of the system in which cavitation is to be monitored includes a pipeline section.

3. Method according to claim 1 or 2, wherein the part of the system in which cavitation is to be monitored includes a restriction, such as a valve, an orifice, a fitting, an elbow, wherein the first position is upstream the restriction and the second temperature position is downstream the restriction.

4. Method according to any of the claims 1-3, wherein a distance between the first position and the second position is between about 1 - 10 times a diameter of the part of the system in which cavitation is to be monitored.

5. Method according to any of the claims 1-4, wherein the first position is not more than two times a diameter of the said part of the system in which cavitation is to be monitored upstream of the said part, preferably nor more than two times a diameter of a pipeline section of the said part upstream of a restriction in the said part.

6. Method according to any of the claims 1-5, wherein the second position is at an outlet of the said part of the hydraulic system to be monitored, preferably at an outlet of a restriction in the said part.

7. Method according to any of the claims 1-6, wherein the cavitation detection signal is issued when the temperature difference exceeds a predefined threshold.

8. Method according to any of the claims 1-7, wherein the first and the second temperature is measured by means of a first temperature sensor and a second temperature sensor respectively and/or wherein a temperature difference between the first position and the second position is obtained by a differential temperature sensor positioned in between the first position and the second position.

9. Method according to claim 8, wherein the temperature sensors are mounted to an outer wall of the hydraulic system at their respective positions or inside of the pipeline sections at their respective positions.

10. Method according to any of the preceding claims, further comprising:

- if cavitation is detected, selecting required fluid properties from a fluid property database based on fluid identity and temperature, calculating a mass fraction of any voids in the fluid at the second position using the selected fluid properties.

11. Method according to any of the preceding claims, further comprising:

- if cavitation is detected, selecting required fluid properties from a fluid property database based on fluid identity and temperature, calculating a density and/or a speed of sound of the fluid at the second position using the selected fluid properties.

12. Method for retrofitting a hydraulic system for cavitation detection, the method comprising:

- placing a first temperature sensor at a first position in the hydraulic system, wherein the first temperature sensor contacts an outer wall of the hydraulic system;
- placing a second temperature sensor at a second position in the hydraulic system, the second position being downstream of the first position, wherein the second temperature sensor contacts an outer wall of the hydraulic system; preferably wherein between the first position and the second position a restriction in the hydraulic system is present;
- providing a control unit configured to receive detected temperature values from the first temperature sensor and the second temperature sensor;
- issuing a cavitation detection signal if a temperature difference is detected.

13. Method according to any of the preceding claims, wherein the hydraulic system a cryogenic hydraulic system is.

**14.** Detection system for detecting cavitation in a hydraulic system, the detection system comprising

- a first temperature sensor configured to be positioned at a first position in the hydraulic system;
- a second temperature sensor configured to be position at a second position in the hydraulic system, the second position being downstream of the first position;
- a control unit configured to receive the temperature values sensed by the first and second temperature sensors and configured to, if a temperature difference is detected, issue a cavitation detection signal.

**15.** Detection system according to claim 14, wherein the detection system is a stand-alone system including an energy supply.

**16.** Detection system according to claim 14 or 15, wherein the control unit further is configured to calculate a mass fraction and/or a density and/or a speed of sound of the fluid at the second position, based on a fluid identity and sensed temperatures at the first position and at the second position.

**17.** Detection system for detecting cavitation in a hydraulic system, the detection system comprising a differential temperature sensor monitoring a temperature difference between a first position and a second position downstream of the first position, and an alert unit configured to issue an alert signal when a temperature difference is detected.

**18.** Flow restriction unit for use in a hydraulic system, the flow restriction unit comprising an inlet pipeline section and an outlet pipeline section with the flow restriction in between, wherein the flow restriction unit comprises a first temperature sensor configured to be positioned at the inlet pipeline section; a second temperature sensor configured to be positioned at the outlet pipeline section, wherein the temperature sensors are operationally connected with a control unit configured to receive the temperature values sensed by the first and second temperature sensors and configured to, if a temperature difference is detected, issue a cavitation detection signal.

**19.** Computer program product comprising instructions to execute the steps of the method of any of the claims 1 - 13.

**20.** Computer-readable medium having stored thereon the computer program of claim 18.

FIG. 1

EP 4 764 439 A1

FIG. 2

Europäisches
Patentamt

European
Patent Office

Office européen
des brevets

# EUROPEAN SEARCH REPORT

**Application Number**

EP 24 22 2618

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 686 212 A (UNIV XUZHOU TECHNOLOGY) 12 March 2024 (2024-03-12) * paragraph [0022] - paragraph [0035]; figures 1,2 * | 1-20 | INV. G01M3/00 G01M99/00 F16K37/00 G01M13/003 |
| X | CN 118 310 738 A (SHAANXI FAST AUTO DRIVE GROUP CO LTD) 9 July 2024 (2024-07-09) * paragraph [0052] - paragraph [0160]; figures 1-5 * | 1-20 | |
| A | ESPOSITO C ET AL: "On the influence of thermal phenomena during cavitation through an orifice", INTERNATIONAL JOURNAL OF HEAT AND MASS TRANSFER, ELSEVIER, AMSTERDAM, NL, vol. 164, 8 October 2020 (2020-10-08), XP086371913, ISSN: 0017-9310, DOI: 10.1016/J.IJHEATMASSTRANSFER.2020.120481 [retrieved on 2020-10-08] * the whole document * | 1-20 | |
| A | US 2014/107952 A1 (KINOSHITA RYOSUKE [JP] ET AL) 17 April 2014 (2014-04-17) * the whole document * | 1-20 | **TECHNICAL FIELDS SEARCHED (IPC)** G01M F16K |

The present search report has been drawn up for all claims

| Place of search | Date of completion of the search | Examiner |
|---|---|---|
| The Hague | 26 May 2025 | Gruss, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 2618

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2025

| Patent document cited in search report | | Publication date | Patent family member(s) | | Publication date |
|---|---|---|---|---|---|
| CN 117686212 | A | 12-03-2024 | NONE | | |
| CN 118310738 | A | 09-07-2024 | NONE | | |
| US 2014107952 | A1 | 17-04-2014 | CN | 103727304 A | 16-04-2014 |
| | | | JP | 2014077517 A | 01-05-2014 |
| | | | KR | 20140046999 A | 21-04-2014 |
| | | | US | 2014107952 A1 | 17-04-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 117628007

**Non-patent literature cited in the description**

- *NIST Chemistry WebBook*, 2023